# EUROPÄISCHE PATENTSCHRIFT

(11) **EP 1 543 319 B1**
(45) Veröffentlichungstag und Bekanntmachung des Hinweises auf die Patenterteilung: **15.04.2009**
(21) Anmeldenummer: 03798057.0
(22) Anmeldetag: 22.08.2003
(51) Int. Cl.: G01N 27/406, G01N 27/407

(54) **SCHALTUNGSANORDNUNG ZUM BETREIBEN EINER LINEAREN ABGASSONDE**
CIRCUIT ARRANGEMENT FOR OPERATING A LINEAR EXHAUST-GAS PROBE
CIRCUIT POUR COMMANDER UNE SONDE A GAZ D'ECHAPPEMENT LINEAIRE

(30) Priorität: 24.09.2002 DE 10244466
(43) Veröffentlichungstag der Anmeldung: 22.06.2005
(73) Patentinhaber: Continental Automotive GmbH, 30165 Hannover (DE)
(72) Erfinder: BOLZ, Stephan, 93102 Pfatter (DE)
(86) Internationale Anmeldenummer: PCT/DE2003/002822
(87) Internationale Veröffentlichungsnummer: WO 2004/029612

(56) Entgegenhaltungen:
- US-A- 4 665 874
- US-A- 4 698 209
- US-A- 4 732 127
- PATENT ABSTRACTS OF JAPAN vol. 013, no. 098 (P-840), 8. März 1989 (1989-03-08) & JP 63 279160 A (NGK SPARK PLUG CO LTD), 16. November 1988 (1988-11-16)

## Beschreibung

Die Erfindung betrifft eine Schaltungsanordnung zum Betreiben einer linearen Abgassonde für eine Brennkraftmaschine gemäß dem Oberbegriff des Anspruchs 1.

Neuere Entwicklungen von Kraftfahrzeugen mit zunehmend niedrigeren Schadstoffemissionen und geringerem Kraftstoffverbrauch erfordern eine vergleichsweise genaue Gemischregelung für die Brennkraftmaschine. Zu diesem Zweck ist der Einsatz einer so genannten linearen Abgassonde mit gepumpter Referenz (Messzelle) von Vorteil, da mit einer solchen Sonde auch eine abhängig von Betriebszuständen der Brennkraftmaschine stark variierende Gaskonzentration (insbesondere Sauerstoff-Partialdruck) im Abgas relativ genau gemessen werden kann.

Bei einer herkömmlich bekannten Sauerstoffsonde (Lambdasonde) ist ein erstes Elektrodenpaar zwischen einer Messkammer und der Umgebungsluft angeordnet und wird zur Messung der Sauerstoffkonzentration in dieser Messkammer verwendet, indem eine durch den Gaskonzentrationsunterschied hervorgerufene Nernstspannung an diesen Messelektroden gemessen wird. Die Messkammer bildet zusammen mit der Messelektrodenanordnung die so genannte Messzelle. Ein zweites Elektrodenpaar ist zwischen der Messkammer und dem Abgasstrom angeordnet und erlaubt bei Anlegen eines elektrischen Stroms entsprechender Polarität Sauerstoffionen aus der Messkammer heraus oder in die Messkammer hinein zu pumpen. Zu diesem Zweck steht die Messkammer über eine Diffusionsbarriere (z.B. aus Zirkonkeramik) mit dem Abgasstrom in Verbindung. Diese Diffusionsbarriere bildet mit den Pumpelektroden die so genannte Pumpzelle.

Im Betrieb dieser bekannten Sonde wird ein dynamisches Gleichgewicht zwischen diffusionsbedingten und pumpstrombedingten Sauerstoffflüssen aus der Messkammer heraus und in die Messkammer hinein durch eine entsprechende Regelung des elektrischen Pumpstroms eingestellt. Als Regelkriterium eignet sich dabei die mit Hilfe der Messelektroden ermittelte Sauerstoffkonzentration in der Messkammer. Diese Konzentration kann z.B. auf einen Wert entsprechend einem Luft/Kraftstoff-Verhältnis von λ=1 mit einer Nernstspannung (Messzellenspannung) von typischerweise 450 mV geregelt werden. Der in diesem Fall durch die Pumpzelle fließende Pumpstrom ist dann ein Maß für die Sauerstoffkonzentration im Abgas bzw. (nach numerischer Umwandlung) ein Maß für das interessierende Luft/Kraftstoff-Verhältnis.

Eine Schaltungsanordnung, mit welcher eine lineare Lambdasonde in dieser Weise betrieben werden kann, ist beispielsweise aus der Deutschen Patentschrift DE 101 01 755 C1 bekannt.

Ferner ist aus der US-Patentschrift 4,698,209 eine Schaltungsanordnung gemäß dem Oberbegriff des Anspruchs 1 bekannt. Bei einem in Fig. 2 dieser Veröffentlichung dargestellten Ausführungsbeispiel umfasst die Schaltungsanordnung einen Vergleichsschaltkreis zum Vergleichen der Messzellenspannung mit einer vorgegebenen Messzellen-Sollspannung. Auf Basis des entsprechenden Vergleichsergebnisses wird der von einer Pumpstromquelle bereitgestellte Pumpstrom geregelt.

Bei der Regelung des Pumpstroms zur Erzielung einer vorbestimmten Gaskonzentration in der Messkammer bzw. einer vorbestimmten Messzellen-Sollspannung ergibt sich in der Praxis folgende Problematik: Die Sonde besitzt eine bestimmte Nenn-Betriebstemperatur in einem Bereich von typischerweise ca. 500°C bis 800°C. Um nach einem Start der Brennkraftmaschine die Sonde möglichst rasch auf deren Betriebstemperatur zu bringen oder auch um die Sondentemperatur gezielt einzustellen, ist oftmals eine eigens zu diesem Zweck vorgesehene Heizeinrichtung an der Sonde angeordnet. Bedingt durch die starke Temperaturabhängigkeit des elektrischen Widerstands des typischerweise zur Bereitstellung der Diffusionsbarriere (Pumpzelle) verwendeten Keramikmaterials ist die Pumpzelle während der Aufheizphase sehr hochohmig. Bei einer Regelung des Pumpstroms zur Erzielung einer gewünschten Gaskonzentration in der Messkammer, also für eine Annäherung der Messzellenspannung an eine vorgegebene Messzellen-Sollspannung (z.B. 450 mV), wird die von der Pumpstromquelle an die Pumpzelle angelegte Pumpspannung zur Erzeugung eines entsprechend großen Pumpstroms relativ groß. Abhängig von dem für die Pumpzelle verwendeten Keramikmaterial kommt es bei Überschreiten einer Pumpspannung von typisch etwa 1,8 V bis 2,5 V zunächst zu einer Beeinträchtigung der Sondenfunktion und schließlich zu einer irreversiblen Schädigung der Sonde, und zwar insbesondere durch eine so genannte "Schwärzung" oder Rissbildung am Material des in der Pumpzelle verwendeten Festelektrolyten.

Im Stand der Technik finden sich verschiedene Lösungsansätze für dieses Problem.

Bei einem ersten Lösungsansatz wird die Pumpzellenspannung permanent dadurch begrenzt, dass die Pumpstromquelle von vornherein mit einem Ausgangsspannungsbereich ausgelegt wird, der eine Schädigung der Sonde ausschließt (z.B. +/- 2,4 V). Bei dieser Lösung ist die Begrenzung (Aussteuerbereich) jedoch nur schwer zu verändern. Ist die Schaltung integriert, so ist dies praktisch nur durch eine Veränderung der Versorgungsspannung zu erreichen, was Nachteile für andere Schaltungsteile mit sich bringen kann. Abhängig vom Aufbau der Pumpstromquelle, z.B. mittels eines Operationsverstärkers, kann der Wert der Begrenzung zudem ungenau sein und vom Pumpstrom abhängen. Bei Verwendung eines Operationsverstärkers ist der Wert der Begrenzung abhängig von der Sättigungsspannung der enthaltenen Ausgangstransistoren. Außerdem können in diesem Fall Erholzeiten der Transistoren zu unerwünschten Einschwingvorgängen beim Verlassen des Begrenzungszustands führen.

Bei einem zweiten Lösungsansatz wird die Pumpzellenspannung mittels einer Diode begrenzt, die der Pumpzelle parallel geschaltet ist. Auf Grund der temperaturabhängigen Kennlinie von Dioden besitzt eine solche Schaltung eine starke Temperaturabhängigkeit und liefert somit wieder eine relativ ungenaue Begrenzung. Ein weiterer gravierender Nachteil resultiert aus folgendem Umstand: Abhängig von der Diodenkennlinie ergibt sich ein mehr oder weniger sanfter Übergang von dem Normalbetrieb (ohne Begrenzung) zu einem Betrieb mit Begrenzung, d.h., mit zunehmender Pumpspannung wächst der durch die Begrenzungsdiode an der Pumpzelle vorbeigeführte Strom allmählich an. Da im Begrenzungsfall ein Teil des von der Pumpstromquelle gelieferten Stroms durch die Pumpzelle und ein weiterer Teil dieses Stroms durch die Begrenzungsdiode fließt, ist der von der Pumpstromquelle gelieferte und von einer Auswerteschaltung gemessene Strom kein Maß mehr für den Stromfluss durch die Pumpzelle, so dass die Messung verfälscht wird.

Bei dem oben bereits erwähnten Stand der Technik gemäß der US-Patentschrift 4,698,209 besteht der Lösungsansatz darin, die Pumpzellenspannung mit einer Schwellspannung zu vergleichen und die Stromversorgung der Pumpzelle für eine bestimmte Zeit zu unterbrechen, wenn die Pumpzellenspannung die Schwellspannung überschreitet.

Es ist daher eine Aufgabe der vorliegenden Erfindung, bei einer linearen Abgassonde der eingangs genannten Art die Pumpspannung in einem vorbestimmten Ausmaß zuverlässig zu begrenzen und hierbei den Messbetrieb durch die getroffenen Begrenzungsmaßnahmen möglichst wenig zu beeinträchtigen.

Diese Aufgabe wird gelöst durch eine Schaltungsanordnung mit den in Anspruch 1 angegebenen Merkmalen. Die abhängigen Ansprüche betreffen vorteilhafte Weiterbildungen der Erfindung.

Bei der erfindungsgemäßen Schaltungsanordnung ist ein Vergleichsschaltkreis zum Vergleichen der an der Pumpzelle anliegenden Spannung mit wenigstens einer vorgegebenen Schwellspannung und zum Bereitstellen eines dem Vergleichsergebnis entsprechenden binären Schaltsignals vorgesehen. Durch diese Maßnahme kann der Wert einer Beschränkung flexibel und sehr genau festgelegt werden, nämlich durch eine vorgegebene Schwellspannung, mit welcher die Pumpspannung verglichen wird. Das als Ergebnis dieses Vergleichs bereitge-stellte binäre Schaltsignal stellt ein in einfacher Weise digital auswertbares Steuersignal dar, welches z.B. von einer elektronischen Motorsteuerung der Brennkraftmaschine zur Erfassung des Begrenzungsfalls vorteilhaft weiterverwendet werden kann. Weiterhin ist gemäß der Erfindung ein zuschaltbarer Gegenkopplungspfad zwischen dem Ausgang der Pumpstromquelle und dem Ansteuerschaltkreis der Pumpstromquelle vorgesehen, welcher im Falle einer Überschreitung der Schwellspannung (Beschränkungsfall) zugeschaltet wird und somit eine geregelte Begrenzung der Pumpspannung realisiert.

Vorteilhaft kann die Pumpspannung zur Anpassung an eine bestimmte Sonde in einfacher Weise auf einen spezifizierten Wert begrenzt werden. Die Spannungsbegrenzung ist also individuell und präzise einstellbar. Ferner wird durch die Spannungsbegrenzung die Messung des durch die Pumpzelle fließenden Pumpstroms nicht verfälscht und besitzt die Begrenzung keine Rückwirkung auf den Normalbetrieb der Schaltungsanordnung. Ferner erlaubt die erfindungsgemäße Schaltungsanordnung ein kontrolliertes Erreichen und Verlassen der Begrenzung ohne Instabilitäten oder Überschwingvorgängen, wobei mit dem binären Schaltsignal einer Motorsteuerung in einfacher Weise das Ansprechen der Spannungsbegrenzung angezeigt werden kann. Bei länger andauernder Begrenzung können Maßnahmen zum Schutz der Sonde vorgenommen werden, beispielsweise die Sonde mittels der Motorsteuerung abgeschaltet werden. Schließlich kommt die erfindungsgemäße Anordnung ohne nachteilige Begrenzung der Ausgangsspannung der Pumpstromquelle selbst aus und besitzt einen einfachen, zur Integration geeigneten Aufbau.

Um eine Begrenzung der Pumpspannung in einem vorbestimmten, zum Betrieb der Sonde zulässigen Spannungsbereich sicherzustellen, ist in einer Weiterbildung der Erfindung vorgesehen, dass der zweite Vergleichsschaltkreis ausgebildet ist zum Vergleichen der an der Pumpzelle anliegenden Spannung mit einer vorgegebenen ersten Schwellspannung und einer vorgegebenen zweiten Schwellspannung und zum Bereitstellen von zwei den Vergleichsergebnissen entsprechenden binären Schaltsignalen, wobei die beiden Schwellspannungen einen für die Spannung an der Pumpzelle zulässigen Spannungsbereich definieren. Bei den ersten und zweiten Schwellspannungen kann es sich z.B. um eine positive und eine negative Schwellspannung handeln, wenn im Betrieb der Pumpstromquelle an deren Ausgang Spannungen mit unterschiedlicher Polarität zu erwarten sind. Vorteilhaft können diese positiven und negativen Spannungsbegrenzungen dann individuell, insbesondere in ihrem Wert voneinander verschieden, vorbestimmt sein.

Auch kann wenigstens eine der Schwellspannungen einstellbar und/oder umschaltbar vorgegeben sein, etwa um die Schaltungsanordnung an verschiedene Sonden individuell anzupassen.

In einer weiteren Ausführung der Erfindung ist vorgesehen, dass der zweite Vergleichsschaltkreis für jeden Vergleich einen Komparator aufweist, von welchem ein erster Eingang mit dem Ausgang der Pumpstromquelle verbunden ist und ein zweiter Eingang mit der entsprechenden Schwellspannung beaufschlagt wird, wobei ein Ausgang des Komparators das entsprechende binäre Schaltsignal bereitstellt und mit einem Steueranschluss eines Schaltelements (z.B. Schalttransistor) verbunden ist, welches zur Bereitstellung des Gegenkopplungspfads den Ausgang der Pumpstromquelle mit einem Eingang des Ansteuerschaltkreises verbindet. Diese Gestaltung realisiert in für eine Integration besonders geeigneter Weise die angestrebte Begrenzungsfunktionalität. Der genannte Eingang des Ansteuerschaltkreises kann hierbei über einen Widerstand mit einem Referenzpotenzial der Schaltungsanordnung beaufschlagt sein, so dass dieser Eingang bzw. das dort herrschende Potenzial sowohl im Normalbetrieb (ohne zugeschaltete Gegenkopplung) als auch im beschränkten Betrieb zur Ansteuerung der Pumpstromquelle Verwendung findet.

Die Erfindung wird nachfolgend anhand von Ausführungsbeispielen mit Bezug auf die beigefügten Zeichnungen weiter beschrieben. Es stellen dar:
- Fig. 1: ein Blockschaltbild einer Schaltungsanordnung nach dem Stand der Technik, zusammen mit einer damit betriebenen linearen Lambdasonde,
- Fig. 2: ein übliches Ersatzschaltbild des Innenwiderstands der Messzelle der in Fig. 1 dargestellten Lambdasonde,
- Fig. 3: eine grafische Darstellung der Temperaturabhängigkeit dieses Innenwiderstands,
- Fig. 4: ein Blockschaltbild, welches für die Erfindung wesentliche Komponenten einer Schaltungsanordnung zum Betreiben einer linearen Abgassonde zeigt,
- Fig. 5: ein Detail aus Fig. 4, nämlich eine Schwellspannungs-quelle, in einer abgewandelten Ausführungsform,
- Fig. 6: simulierte Signalverläufe der Schaltungsanordnung von Fig. 4 im normalen Betrieb (Fig. 6a) sowie im Betrieb mit aktivierter Pumpspannungsbegrenzung (Fig. 6b),
- Fig. 7: ein Blockschaltbild, welches wesentliche Komponenten einer weiteren Ausführungsform einer erfindungsgemäßen Schaltungsanordnung darstellt, und
- Fig. 8: der Fig. 6b entsprechende simulierte Signalverläufe bei aktivierter Pumpspannungsbegrenzung, jedoch für die mit Fig. 7 dargestellte Schaltungsanordnung.

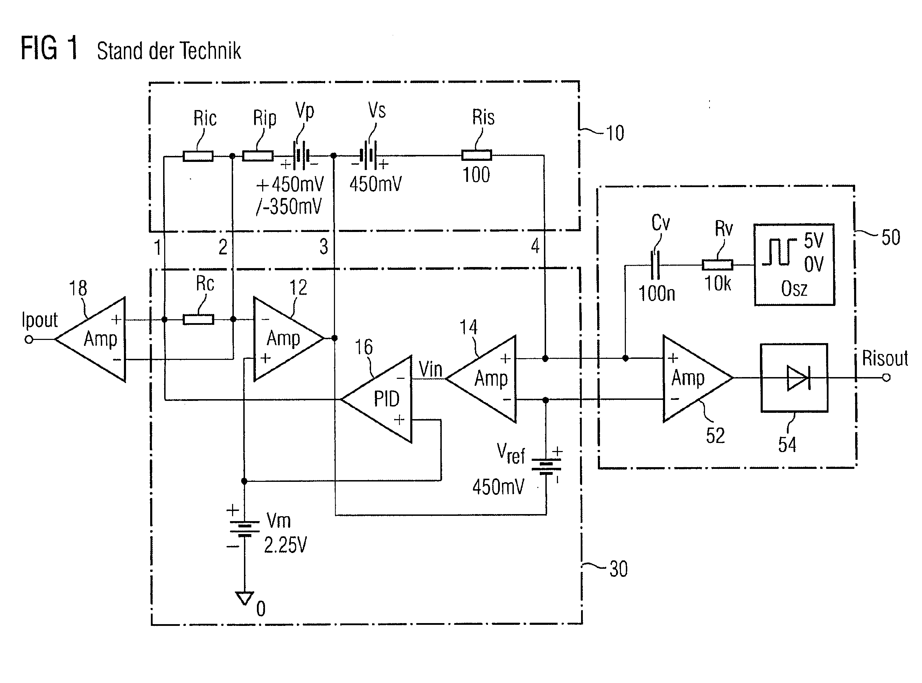

Fig. 1 zeigt in ihrem oberen Teil eine insgesamt mit 10 bezeichnete, herkömmliche Sonde zur Messung der Sauerstoffkonzentration bzw. der Luftzahl λ im Abgas einer Brennkraftmaschine.

Die Sonde 10 umfasst eine Messzelle, welche im Schaltbild durch eine Nernstspannung Vs und einen Innenwiderstand der Messzelle Ris symbolisiert wird, sowie eine Pumpzelle, die im Schaltbild durch eine Polarisationsspannung Vp und einen Innenwiderstand der Pumpzelle Rip symbolisiert wird. Sondenanschlüsse 3 und 4 bilden ein Messelektrodenpaar der Sonde 10 zur Messung der Sauerstoffkonzentration in einer Messkammer der Sonde 10 durch Bestimmung der zwischen den Anschlüssen 3 und 4 herrschenden Messzellenspannung Vs. Die in der Figur angegebenen Spannungswerte und Bauelementwerte sind als lediglich beispielhaft zu betrachten.

Im Betrieb der Sonde 10 wird die Sauerstoffkonzentration in der Messkammer auf einen vorbestimmten Wert entsprechend einem vorbestimmten Wert der Messzellenspannung (Messzellen-Sollspannung) geregelt durch entsprechende Ansteuerung einer Pumpstromquelle 12, mittels welcher eine Pumpspannung und dementsprechend ein Pumpstrom erzeugt wird, der über die Anschlüsse 1 bzw. 2 und dem Anschluss 3 durch die Pumpzelle fließt und eine Wanderung von Sauerstoffionen in die Messkammer hinein oder aus der Messkammer heraus bewirkt (Pumpen). Der Pumpstrom fließt über eine Parallelschaltung eines in der Sonde 10 angeordneten Kalibrierwiderstands Ric und eines externen Messwiderstands Rc.

Der Anschluss 4 der Sonde ist mit dem nicht-invertierenden Eingang eines Differenzverstärkers 14 verbunden, dessen invertierender Eingang mit einer Messzellen-Sollspannung Vref beaufschlagt wird durch eine zwischen diesem invertierenden Eingang und dem Sondenanschluss 3 angeordnete Spannungsquelle. Dieser Differenzverstärker 14 vergleicht somit die Messzellenspannung Vs (Nernstspannung) mit der Messzellen-Sollspannung Vref und erzeugt an seinem Ausgang ein analoges Abweichungssignal Vin. Dieses Abweichungssignal Vin wird dem invertierenden Eingang eines PID-Reglers 16 eingegeben, dessen nicht-invertierender Eingang mit einer Mittenspannung Vm durch eine zwischen diesem Eingang und einem Masseanschluss der Schaltungsanordnung angeordnete Spannungsquelle beaufschlagt wird. Am Ausgang des PID-Reglers 16 wird somit aus dem Abweichungssignal Vin ein Ansteuersignal für eine nachfolgende Pumpstromquelle 12 gebildet. Hierzu ist der Ausgang des PID-Reglers 16 über den Sondenanschluss 1 mit dem Kalibrierwiderstand Ric der Sonde 10 sowie einem Anschluss des externen Messwiderstands Rc verbunden, dessen anderer Anschluss mit dem Sondenanschluss 2 und dem invertierenden Eingang der als Operationsverstärker aufgebauten Pumpstromquelle 12 verbunden ist. Der nicht-invertierende Eingang der Pumpstromquelle 12 ist mit dem nicht-invertierenden Eingang des PID-Reglers 16 verbunden und somit ebenfalls mit der Mittenspannung Vm gegenüber Masse beaufschlagt. Der PID-Regler 16 bildet somit einen Ansteuerschaltkreis für die Pumpstromquelle 12, so dass im Betrieb der Sonde 10 die Messzellenspannung (Vs) an die Messzellen-Sollspannung (Vref) geregelt angenähert wird.

Der im unteren Teil der Fig. 1 mit 30 bezeichnete Block bildet zusammenfassend eine Regelung für den Pumpstrom, der basierend auf einer Messung der Messzellenspannung Vs in geregelter Weise von der Pumpstromquelle 12 erzeugt wird.

Ein Auswerteverstärker 18 ist zur Messung des durch die Parallelschaltung von Ric, Rc fließenden Pumpstroms als Maß für die Sauerstoffkonzentration bzw. Luftzahl des Abgasstroms vorgesehen. Diese Pumpstrommessung erfolgt durch Messung des Spannungsabfalls an der Widerstandsanordnung Ric, Rc, indem der Eingang dieses Auswerteverstärkers 18, der von einem nicht-invertierenden Eingang und einem invertierenden Eingang gebildet ist, diesen Widerständen parallel geschaltet ist. Das am Ausgang des Verstärkers 18 bereitgestellte Signal Ipout wird von einer nicht dargestellten elektronischen Motorsteuerung (z.B. Mikrocontroller) für eine Gemischaufbereitung ausgewertet und verwendet. Durch den Aufbau der Pumpstromquelle 12 als invertierender Operationsverstärker wird erreicht, dass der durch die Widerstände Ric, Rc fließende Strom auch als Pumpstrom durch die Pumpzelle der Sonde 10 strömt, wobei der Operationsverstärker 12 auf Grund der über die Pumpzelle realisierten Rückkopplung seine Ausgangsspannung derart einstellt, dass die Eingangsspannungsdifferenz annähernd Null ist. Der Auswerteverstärker 18 erfasst dann den durch den Pumpstrom erzeugten Spannungsabfall an der Parallelschaltung der Widerstände Ric und Rc, verstärkt diesen Spannungsabfall und stellt an seinem Ausgang schließlich ein Maß des Pumpstroms in Form einer Spannung bereit, die dann einem A/D-Wandler der Motorsteuerung zur weiteren Verarbeitung zugeleitet wird.

Der im rechten Teil der Fig. 1 mit 50 bezeichnete Block stellt eine an sich bekannte Schaltung zur Messung des Innenwiderstands Ris der Messzelle der Sonde 10 dar. Da dieser Innenwiderstand Ris wesentlich von der Temperatur der Sonde 10 beeinflusst wird und die Kenntnis der Sondentemperatur für verschiedene Zwecke nützlich ist, realisiert diese Schaltung mittelbar eine Messung der Sondentemperatur. Mit einem Oszillator Osz wird ein Wechselstromsignal erzeugt, welches über einen Widerstand Rv und einem Entkopplungskondensator Cv der Sonde 10 eingeprägt wird, wobei sich die Frequenz des Oszillatorsignals von der Frequenz des Sondennutzsignals hinreichend unterscheidet. In Antwort auf das eingeprägte Signal wird, abhängig von dem Innwiderstand Ris der Sonde 10, ein Wechselstromsignal erhalten, dessen Amplitude repräsentativ für den Widerstand Ris und somit repräsentativ für die Sondentemperatur ist. Ein Maß dieser Amplitude wird erhalten durch Verstärkung des Wechselstromsignals durch einen Verstärker 52 und nachfolgende Gleichrichtung durch einen Gleichrichter 54, an dessen Ausgang somit ein die Sondentemperatur angebendes Signal Risout für die Motorsteuerung bereitgestellt wird.

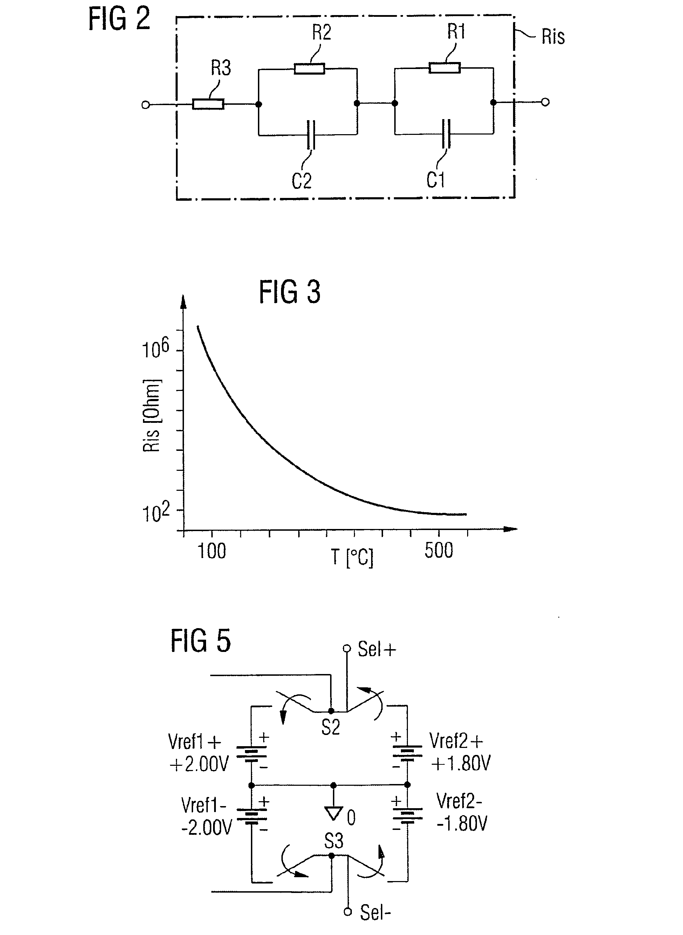

Fig. 2 zeigt ein gebräuchliches Ersatzschaltbild für den Innenwiderstand (Impedanz) Ris der Sonde 10. Hierbei repräsentieren R1 und C1 die Übergangsimpedanz zwischen Elektroden und Keramikmaterial, R2 und C2 die Übergangsimpedanz zwischen Korngrenzen von Keramiksinterkörnern und R3 den Eigenwiderstand der Sinterkeramik.

Fig. 3 veranschaulicht in halblogarithmischer Auftragung den stark temperaturabhängigen Innenwiderstand Ris. Daraus ist ersichtlich, dass der Widerstand über den in der Praxis relevanten Temperaturbereich über viele Größenordnungen variiert. Eine qualitativ gleiche Charakteristik ergibt sich für den Innenwiderstand Rip der Pumpzelle der Sonde 10.

Beim Betrieb der in Fig. 1 dargestellten Schaltung ergibt sich folgende Problematik. Die Pumpzellenspannung zwischen den Sondenanschlüssen 2 und 3 hängt von der Polarisationsspannung Vp (z.B. -350 mV bis +450 mV) und dem Produkt aus Pumpstrom und Pumpzellenwiderstand Rip ab. Bei betriebsbereiter Sonde, d.h., wenn die Sonde 10 ihre Betriebstemperatur von z.B. 750°C erreicht hat, beträgt der Innenwiderstand Rip z.B. etwa 100 Ohm, so dass bei einem typischen Pumpstrom von 6 mA die Pumpzellenspannung ca. 1 V betragen wird, was unter denjenigen Pumpzellenspannungen liegt, bei welchen typischerweise eine Schädigung der Sonde 10 durch Schwärzung einsetzt.

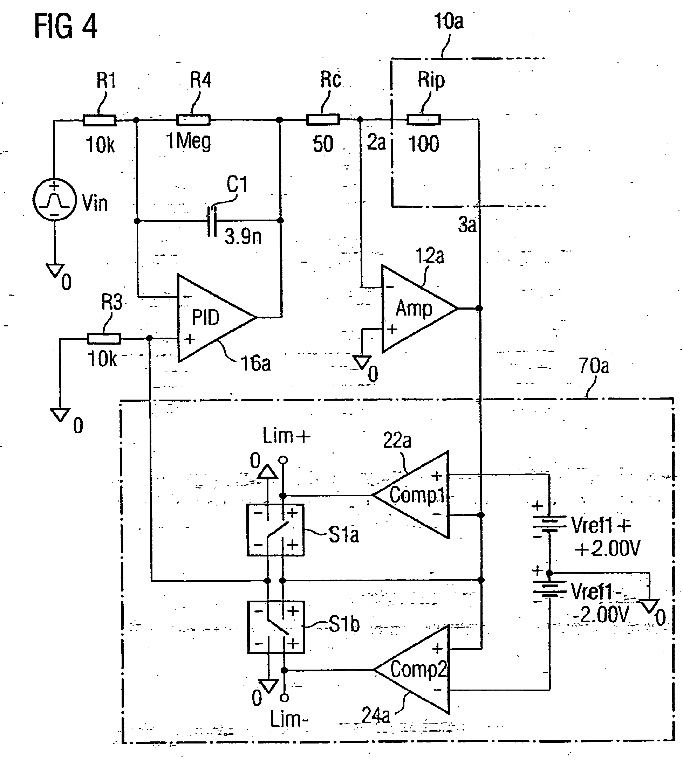

Um die Brennkraftmaschine nach dem Start möglichst bald geregelt betreiben zu können, was zu einer Emissionsreduzierung beiträgt, wartet man jedoch möglichst nicht, bis die Sonde 10 sicher ihre normale Betriebstemperatur erreicht hat, sondern versucht man, die Sonde 10 früher einzuschalten. Wird nun während der Aufheizphase der Sonde die oben beschriebene Regelschleife zur Erzeugung des Pumpstroms geschlossen, so wird der Differenzverstärker 14 eine Regelabweichung Vin erzeugen, die der PID-Regler 16 in eine relativ große Pumpstromvorgabe (Spannung an Rc, Ric) umsetzt, wobei die Pumpstromquelle 12 dann versucht, dieser Vorgabe dadurch zu entsprechen, dass die Spannung an der Pumpzelle solange erhöht wird, bis der erforderliche Pumpstrom fließt. Bei einer Sondentemperatur von 400°C (entsprechend z.B. einem Innenwiderstand Rip von 3,5 Kiloohm) reicht nun bereits eine Pumpstromvorgabe von weniger als 1 mA, um typische maximal zulässige Pumpzellenspannungen zu überschreiten. Zur Vermeidung dieser für die Sonde 10 auf Dauer schädlichen Situation müssen geeignete Maßnahmen getroffen werden. Die gemäß der Erfindung vorgesehenen Maßnahmen führen zu einer zuverlässigen Beschränkung der Pumpspannung und werden nachfolgend anhand von Ausführungsbeispielen mit Bezug auf die Fig. 4 bis Fig. 8 erläutert.

Bei dieser nachfolgenden Beschreibung von Ausführungsbeispielen werden für analoge Komponenten bzw. Blöcke die gleichen Bezugszahlen verwendet, jeweils ergänzt durch einen kleinen Buchstaben zur Unterscheidung der Ausführungsform. Dabei wird im Wesentlichen nur auf die Unterschiede zu dem bzw. den bereits beschriebenen Ausführungsbeispielen eingegangen und im übrigen hiermit ausdrücklich auf die Beschreibung vorangegangener Ausführungsbeispiele verwiesen.

Fig. 4 stellt eine erfindungsgemäße Schaltungsanordnung zum Betreiben einer linearen Lambdasonde 10a dar, wobei einige der zuvor bereits erläuterten Schaltungskomponenten weggelassen sind, die für das Verständnis des Erfindungsgedankens nicht wesentlich sind. Hinsichtlich deren Funktion wird auf die Erläuterungen zu der in Fig. 1 dargestellten Schaltung verwiesen.

Die Schaltung gemäß Fig. 4 ist wie folgt aufgebaut: Eine Signalquelle, welche das oben bereits erwähnte analoge Abweichungssignal Vin bereitstellt, ist einerseits mit Masse verbunden und andererseits mit einem Anschluss eines Widerstands R1. Der andere Anschluss des Widerstands R1 führt weiter zu ersten Anschlüssen eines Widerstands R4 und eines Kondensators C1 sowie zu dem invertierenden Eingang eines PID-Verstärkers 16a. Der nicht-invertierende Eingang des PID-Verstärkers 16a ist mit ersten Schaltkontakten von Schaltelementen S1a und S1b (z.B. Schalttransistoren) sowie über einen Widerstand R3 mit Masse verbunden. Der Ausgang des PID-Verstärkers 16a ist mit den zweiten Anschlüssen von R4 und C1 sowie über einen Kalibrierwiderstand Rc und einen Sondenanschluss 2a mit einem Innenwiderstand Rip einer Pumpzelle der Sonde 10a und dem nicht-invertierenden Eingang eines die Pumpstromquelle bildenden Verstärkers 12a verbunden. Der nicht-invertierende Eingang des Verstärkers 12a ist mit Masse verbunden. Der Ausgang des Verstärkers 12a führt zu dem anderen Anschluss des Pumpzellen-Innenwiderstands Rip (Sondenanschluss 3a), dem invertierenden Eingang eines ersten Komparators 22a, dem nicht-invertierenden Eingang eines zweiten Komparators 24a und zu zweiten Schaltkontakten der Schalter S1a und S1b. Der Ausgang des Komparators 22a ist mit einem Steuereingang des Schalters S1a verbunden, wohingegen der Ausgang des Komparators 24a mit einem Steuereingang des Schalters S1b verbunden ist. Der nicht-invertierende Eingang des Komparators 22a ist mit dem positiven Pol einer ersten Schwellspannungsquelle Vref1+ verbunden, deren negativer Pol einerseits mit Masse verbunden ist und andererseits weiter zu dem positiven Pol einer zweiten Schwellspannungsquelle Vref1 - führt, deren negativer Pol mit dem invertierenden Eingang des Komparators 24a verbunden ist.

Die Schaltung arbeitet wie nachfolgend beschrieben. Die im oberen Teil der Figur 4 dargestellten Komponenten PID 16a, R1, R4, C1 und Pumpstromquelle 12a mit Rc und Rip entsprechen der in Fig. 1 gezeigten typischen Schaltungsanordnung zum Regeln des Pumpstroms basierend auf einem Regelabweichungssignal Vin. Die in Fig. 4 dargestellte, dieses Signal Vin bereitstellende Signalquelle entspricht dem Ausgang des in Fig. 1 dargestellten Differenzverstärkers 14.

Die Besonderheit der in Fig. 4 dargestellten Schaltung, nämlich ein zweiter Vergleichsschaltkreis 70a, ist aus dem unteren Teil des Schaltbildes ersichtlich. Die Spannung am Ausgang der Pumpstromquelle 12a (Pumpspannung) wird mittels der beiden Komparatoren 22a, 24a mit einer positiven Referenzspannung Vref1+ und mit einer negativen Referenzspannung Vref1- verglichen. Diese beiden Referenzspannungen definieren einen für die Pumpspannung zulässigen Spannungsbereich zum Schutz der Pumpzelle vor zu hohen Spannungen.

Wenn die Pumpspannung zwischen der positiven Referenzspannung und der negativen Referenzspannung liegt, so stellen die Ausgänge der Komparatoren 22a, 24a jeweils ein Signal mit niedrigem Pegel (Logikpegel) bereit, welches als Anzeigesignal Lim+ bzw. Lim- der nicht dargestellten Motorsteuerung zur Verfügung gestellt wird.

Überschreitet die Pumpspannung der Pumpstromquelle 12a jedoch die positive Referenzspannung Vref1+, so wechselt der Ausgang des Komparators 22a auf ein Signal mit hohem Pegel, was der Motorsteuerung über das Signal Lim+ angezeigt wird. Der hohe Pegel des Signals Lim+ führt außerdem dazu, dass das Schal-telement S1a schließt und somit eine Verbindung zwischen dem Ausgang der Pumpstromquelle 12a und dem nicht-invertierenden Eingang des PID-Verstärkers 16a schafft. Andererseits, falls die Pumpspannung die negative Referenzspannung Vref1- unterschreitet, so wechselt der Ausgang des Komparators 24a auf ein Signal mit hohem Pegel und das Schaltelement S1b schließt. Auch dieser Fall wird über das Signal Lim- der Motorsteuerung mitgeteilt und führt mittels des Schaltelements S1b zur Schaffung einer Verbindung zwischen dem Ausgang der Pumpstromquelle 12a und dem PID-Verstärker 16a.

Im normalen Betrieb der Schaltungsanordnung, d.h. wenn die Pumpspannung zwischen den als Schwellspannungen fungierenden Referenzspannungen Vref1+, Vref1- liegt, wird der nicht-invertierende Eingang des PID-Verstärkers 16a über den Widerstand R3 mit einem vorbestimmten Potenzial (hier Massepotenzial) beaufschlagt, wohingegen bei einer Überschreitung einer der Schwellspannungen durch das Schließen des entsprechenden Schaltelements S1 ein Gegenkopplungspfad geschaffen wird, der den nicht-invertierenden Eingang des PID-Verstärkers 16a mit einer Spannung beaufschlagt, welche, hinsichtlich der Pumpspannungserzeugung, der Vorgabespannung Vin entgegenwirkt, so dass sich ein stabiles Gleichgewicht zwischen der über R1 auf den invertierenden Eingang des PID-Verstärkers 16a wirkenden Spannung und der über den Gegenkopplungspfad auf den nicht-invertierenden Eingang des PID-Verstärkers 16a wirkenden Spannung derart einstellt, dass die Pumpspannung den Wert einer Schwellspannung praktisch nicht überschreitet. Zusammenfassend wird die Ausgangsspannung der Pumpstromquelle 12a in geregelter Weise auf einen vorbestimmten Spannungsbereich (Vref1+, Vref1-) eingeschränkt.

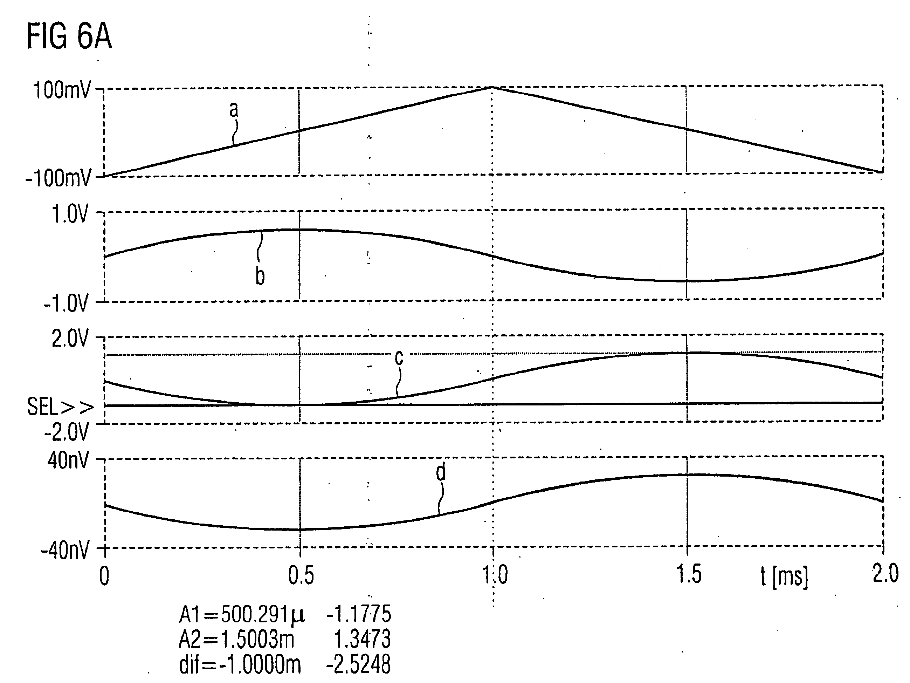

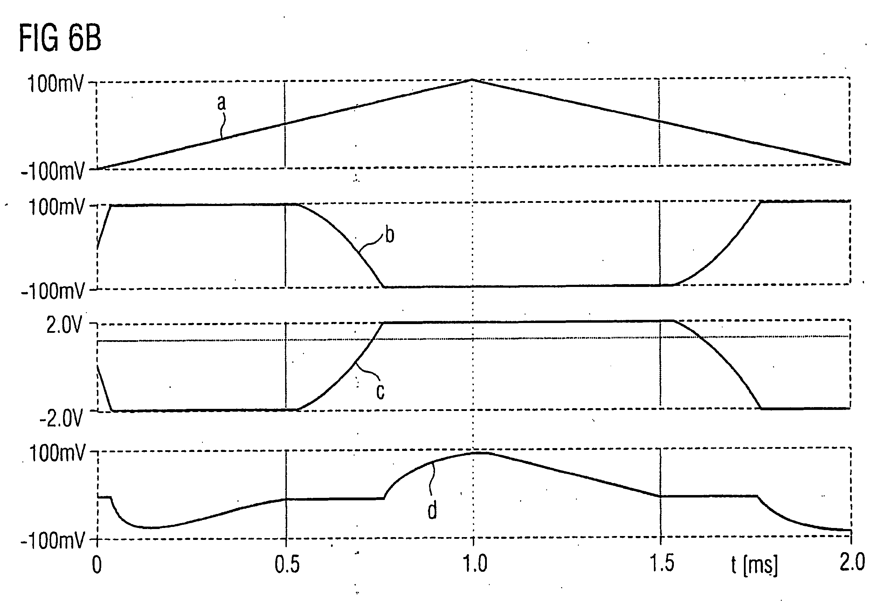

Die Fig. 6a und 6b veranschaulichen diesen Sachverhalt anhand von simulierten Signalverläufen für die Schaltung nach Fig. 4, wobei Fig. 6a Signale im normalen Betrieb (ohne Begrenzung) zeigt und Fig. 6b dieselben Signale im Begrenzungsfall darstellt. Zur Simulation des Begrenzungsfalls wurde lediglich der Innenwiderstand Rip der Pumpzelle von 100 Ohm auf 1 Kiloohm erhöht und das Vorgabesignal Vin unverändert gelassen.

In den Figuren 6a und 6b stellen dar:
a: das Abweichungssignal Vin,
b: das Signal am Ausgang des PID-Verstärkers 16a,
c: das Signal am Ausgang der Pumpstromquelle 12a,
d: das Signal am nicht-invertierenden Eingang des PID-Verstärkers 16a.

Aus Fig. 6a ist ersichtlich, dass ausgehend von dem hier als Dreieckssignal vorgesehenen Abweichungssignal Vin durch das Integratorverhalten der PID-Regelung 16a dieses Signal in ein Sinussignal umgeformt wird, welches zudem invertiert ist. Die Pumpspannung (Kurve c) liegt noch stets innerhalb des durch die Begrenzerschwellen definierten zulässigen Bereichs. Die äußerst geringen Spannungen am nicht-invertierenden Eingang des PID-Verstärkers 16a sind durch einen nicht unendlichen Widerstand der Schaltelemente S1a, S1b hervorgerufen und praktisch ohne Bedeutung.

Für den Begrenzungsfall gemäß Fig. 6b ist ersichtlich, dass nun das Ausgangssignal des PID-Verstärkers 16a (Kurve b) drastisch begrenzt wird. Dementsprechend liegt das Ausgangssignal der Pumpstromquelle 12a (Kurve c) in den entsprechenden Zeiträumen exakt auf der Begrenzerschwelle. Bis zum Erreichen der Begrenzerschwelle ist der Wert des Signals am nicht-invertierenden Eingang des PID-Verstärkers 16 (Kurve d) 0 V. Nach Erreichen der Begrenzerschwelle folgt dieses Signal dem Verlauf von Vin, bis die Begrenzerschwelle wieder unterschritten wird. Dann fällt das Signal wieder auf 0 V zurück.

Fig. 5 veranschaulicht eine Modifikation der Schaltungsanordnung nach Fig. 4 im Bereich der Bereitstellung der Schwellspannungen. Mit dieser Modifikation ist es möglich, sowohl die positive Referenzspannung als auch die negative Referenzspannung umschaltbar vorzugeben. Hierzu sind jeweils zwei positive Referenzspannungen Vref1+, Vref2+ und zwei negative Referenzspannungen Vref1-, Vref2- vorgesehen, wobei durch entsprechende Steuersignale Sel+, Sel- mit den Wechselschaltern S2 bzw. S3 eine Umschaltung erfolgen kann.

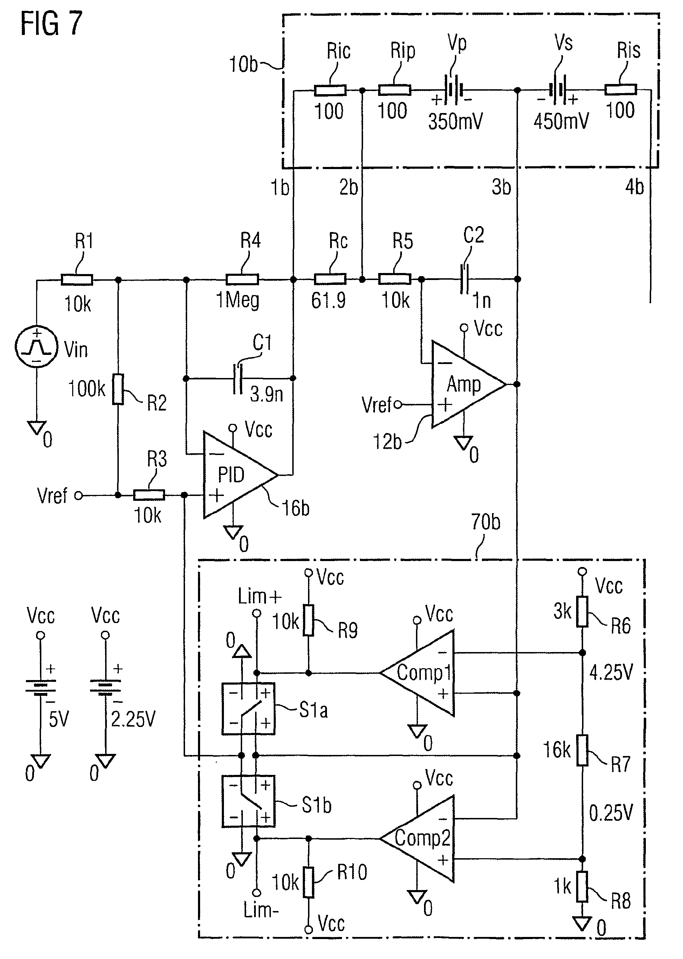

Fig. 7 zeigt eine weitere Ausführungsform einer erfindungsgemäßen Schaltungsanordnung, angepasst an den Anwendungsfall der in Fig. 1 dargestellten bekannten Schaltungsanordnung.

Bedingt durch die Versorgung der gesamten in Fig. 7 dargestellten Schaltung aus einer einzigen Spannungsquelle mit einem positiven Versorgungspotenzial Vcc (5V) sind die nicht-invertierenden Eingänge des PID-Verstärkers 16b und der Pumpstromquelle 12b nun auf ein daraus abgeleitetes Referenzpotenzial Vref (2,25V) bezogen. Dementsprechend sind auch die Schwellspannungen des zweiten Vergleichsschaltkreises 70b verschoben, nämlich auf eine positive Referenzspannung von 2,25V + 2V = 4,25V und eine negative Referenzspannung von 2,25V - 2V = 0,25V. Wie bei der in Fig. 4 dargestellten Ausführungsform ist hier ebenfalls nur ein Referenzspannungspaar für die Definition des zulässigen Pumpspannungsbereichs vorgesehen.

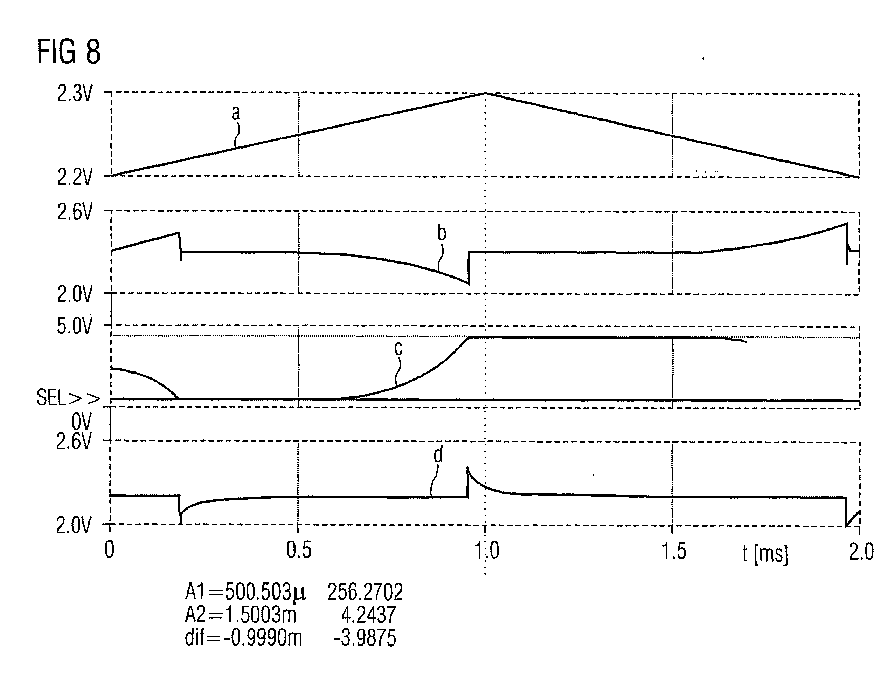

Die simulierten Signalverläufe (ähnlich der Fig. 6b) wurden auch für diese Schaltungsanordnung im Begrenzungsfall ermittelt und sind in Fig. 8 dargestellt.

Zusammenfassend wird durch die Erfindung eine Begrenzung der Pumpspannung dadurch bewirkt, dass bei Überschreiten einer vorgegebenen Schwelle das zu begrenzende Spannungssignal (Pumpspannung) der ursächlichen Steuerungsgröße (Vin) entgegenwirkt bzw. deren Einfluss zum Zwecke der Begrenzung verringert. Bei den dargestellten Ausführungsbeispielen ist diese Spannungsbegrenzung mittels Komparatoren realisiert, welchen einerseits die Spannung am Ausgang der Pumpstromquelle und andererseits eine Referenzspannung eingegeben wird, bei deren Überschreitung nachfolgende Schaltelemente zur Einrichtung eines Gegenkopplungspfads aktiviert werden.

## Patentansprüche

1. Schaltungsanordnung zum Betreiben einer linearen Abgassonde (10) für eine Brennkraftmaschine, wobei die Abgassonde eine Messzelle zur Messung einer Gaskonzentration in einer Messkammer der Abgassonde durch Bestimmung einer Messzellenspannung (Vs) sowie eine Pumpzelle zum Pumpen von Gas aus der Messkammer heraus oder in die Messkammer hinein durch Beaufschlagung der Pumpzelle mit einem Pumpstrom aufweist,
wobei die Schaltungsanordnung umfasst:
- einen Vergleichsschaltkreis (14) zum Vergleichen der Messzellenspannung (Vs) mit einer vorgegebenen Messzellen-Sollspannung (Vref) und zum Bereitstellen eines dem Vergleichsergebnis entsprechenden analogen Abweichungssignals (Vin), und
- eine Pumpstromquelle (12) zur Bereitstellung des Pumpstroms, welche mittels des Abweichungssignals (Vin) über einen Ansteuerschaltkreis (16) für eine Annäherung der Messzellenspannung (Vs) an die Messzellen-Sollspannung (Vref) angesteuert wird,
**dadurch gekennzeichnet, dass** die Schaltungsanordnung ferner umfasst:
- einen zweiten Vergleichsschaltkreis (70) zum Vergleichen der an der Pumpzelle anliegenden Spannung mit wenigstens einer vorgegebenen Schwellspannung (Vref+, Vref-) und zum Bereitstellen eines dem Vergleichsergebnis entsprechenden binären Schaltsignals (Lim+, Lim-), und
- einen zuschaltbaren Gegenkopplungspfad zwischen dem Ausgang der Pumpstromquelle (12) und dem Ansteuerschaltkreis (16) der Pumpstromquelle, welcher im Falle einer Überschreitung der Schwellspannung (Vref+, Vref-) zugeschaltet wird.

2. Schaltungsanordnung nach Anspruch 1, wobei der zweite Vergleichsschaltkreis (70) ausgebildet ist zum Vergleichen der an der Pumpzelle anliegenden Spannung mit einer vorgegebenen ersten Schwellspannung (Vref+) und einer vorgegebenen zweiten Schwellspannung (Vref-) und zum Bereitstellen von zwei den Vergleichsergebnissen entsprechenden binären Schaltsignalen (Lim+, Lim-), wobei die beiden Schwellspannungen (Vref+, Vref-) einen für die Spannung an der Pumpzelle zulässigen Spannungsbereich definieren.

3. Schaltungsanordnung nach Anspruch 1 oder 2, wobei wenigstens eine der Schwellspannungen (Vref+, Vref-) einstellbar und/oder umschaltbar vorgegeben ist.

4. Schaltungsanordnung nach Anspruch 1, 2 oder 3, wobei der zweite Vergleichsschaltkreis (70) für jeden Vergleich einen Komparator (22, 24) aufweist, von welchem ein erster Eingang mit dem Ausgang der Pumpstromquelle (12) verbunden ist und ein zweiter Eingang mit der entsprechenden Schwellspannung (Vref+, Vref-) beaufschlagt wird, wobei ein Ausgang des Komparators das entsprechende binäre Schaltsignal (Lim+, Lim-) bereitstellt und mit einem Steueranschluss eines Schaltelements (S1a, S1b) verbunden ist, welches zur Bereitstellung des Gegenkopplungspfads den Ausgang der Pumpstromquelle (12) mit einem Eingang des Ansteuerschaltkreises (16) verbindet.

## Claims

1. Circuit arrangement for operating a linear exhaust-gas probe (10) for an internal combustion engine, in which the exhaust-gas probe has a measuring cell for measuring a gas concentration in a measuring chamber of the exhaust-gas probe by determining a measuring-cell voltage (Vs), in addition to a pump cell for pumping gas out of the measuring chamber or into the measuring chamber by applying a pump current to the pump cell,
such that the circuit arrangement comprises:
- a comparator circuit (14) for comparing the measuring-cell voltage (Vs) with a predefined measuring-cell target voltage (Vref) and for providing an analogue deviation signal (Vin) corresponding to the comparison result, and
- a pump current source (12) for providing the pump current, said source being controlled by means of the deviation signal (Vin) using a control circuit (16) for an approximation of the measuring cell voltage (Vs) to the measuring-cell target voltage (Vref),
**characterised in that** the circuit arrangement further comprises:
- a second comparator circuit (70) for comparing the voltage applied to the pump cell with at least one predefined threshold voltage (Vref+, Vref-) and for providing a binary switching signal (Lim+, Lim-) corresponding to the comparison result, and
- a switchable counter coupling path between the output of the pump current source (12) and the control circuit (16) of the pump current source, said path being enabled when the threshold voltage (Vref+, Vref-) is exceeded.

2. Circuit arrangement according to claim 1, in which the second comparator circuit (70) is designed for comparing the voltage applied to the pump cell with a predefined first threshold voltage (Vref+) and a predefined second threshold voltage (Vref-) and also designed for providing two binary switching signals (Lim+, Lim-) corresponding to the results of the comparisons, the two threshold voltages (Vref+, Vref-) defining a voltage range which is permissible for the voltage at the pump cell.

3. Circuit arrangement according to claim 1 or 2, in which at least one of the threshold voltages (Vref+, Vref-) is predefined as adjustable and/or switch-selectable.

4. Circuit arrangement according to claim 1, 2 or 3, in which the second comparator circuit (70) has a comparator (22, 24) for each comparison, and a first input of said comparator is connected to the output of the pump current source (12), and the corresponding threshold voltage (Vref+, Vref-) is applied to a second such input, such that an output of the comparator provides the corresponding binary switching signal (Lim+, Lim-) and is connected to a control gate of a switching element (S1a, S1b) which connects the output of the pump current source (12) to an input of the control circuit (16) for the purpose of providing the counter coupling path.

## Revendications

1. Circuit destiné à faire fonctionner une sonde linéaire de gaz d'échappement (10) pour un moteur à combustion interne, la sonde de gaz d'échappement comprenant d'une part une cellule de mesure pour mesurer une concentration gazeuse dans une chambre de mesure appartenant à la sonde de gaz d'échappement par détermination d'une tension (Vs) de cellule de mesure, et d'autre part une cellule de pompage de gaz pour l'évacuation ou le remplissage de la chambre de mesure grâce à l'application à cette chambre de pompage d'un courant de pompage,
ledit circuit comprenant :
- un circuit de comparaison (14) destiné à comparer la tension de la cellule de mesure (Vs) à une tension de consigne prédéterminée (Vref) de la cellule de mesure, et à fournir un signal analogique d'écart (Vin) correspondant au résultat de la comparaison, et
- une source de courant de pompage (12) qui est destinée à fournir du courant de pompage et qui est commandée au moyen du signal d'écart (Vin) par l'intermédiaire d'un circuit de commande (16) afin de rapprocher la tension (Vs) de la cellule de mesure de la tension de consigne (Vref) de celle-ci,
**caractérisé en ce qu'**il comprend également :
- un deuxième circuit de comparaison (70) destiné à comparer la tension appliquée à la cellule de pompage à au moins une tension de seuil prédéterminée (Vref+, Vref-) et pour fournir un signal de commutation binaire (Lim+, Lim-) correspondant au résultat de la comparaison, et
- un trajet de contre- réaction pouvant être mis en circuit menant de la sortie de la source de pompage (12) au circuit de commande (16) de celle-ci, ce trajet de contre-réaction étant mis en circuit lorsque la tension de seuil est dépassée (Vref+, Vref-).

2. Circuit selon la revendication 1, dans lequel le deuxième circuit de comparaison (70) est conçu pour comparer une tension appliquée à la cellule de pompage à une première tension de seuil prédéterminée (Vref+) et à une deuxième tension de seuil prédéterminée (Vref-), et pour fournir deux signaux de commutation binaires (Lim+, Lim-) correspondant aux résultats des comparaisons, les deux tensions de seuil (Vref+, Vref-) définissant un domaine de tension admissible pour la tension appliquée à la cellule de pompage.

3. Circuit selon la revendication 1 ou la revendication 2, dans lequel au moins l'une des tensions de seuil (Vref+, Vref-) est prévue réglable et/ou commutable.

4. Circuit selon la revendication 1, 2 ou 3 dans lequel le deuxième circuit de comparaison (70) comprend pour chaque comparaison un comparateur (22, 24), dont une première entrée est connectée à la sortie de la source de courant de pompage (12) et dont une deuxième entrée reçoit la tension de seuil correspondante (Vref+, Vref-), une sortie du comparateur fournissant le signal binaire de commutation correspondant (Lim+, Lim-) et étant reliée à la borne de commande d'un élément de commutation (S1a, S1b) qui, pour constituer le trajet de contre-réaction, relie la sortie de la source de courant de pompage (12) à l'entrée du circuit de commande (16).
